(19) Europäisches Patentamt / European Patent Office / Office européen des brevets

(11) **EP 2 202 132 A2**

(12) **EUROPEAN PATENT APPLICATION**

(43) Date of publication:
**30.06.2010 Bulletin 2010/26**

(51) Int Cl.:
**B62D 15/02** *(2006.01)* **B60W 30/06** *(2006.01)*

(21) Application number: **09179081.6**

(22) Date of filing: **14.12.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **25.12.2008 JP 2008330429**

(71) Applicant: **Kabushiki Kaisha Toyota Jidoshokki Kariya-shi, Aichi 448-8671 (JP)**

(72) Inventors:
• **Kimura, Tomio**
  **Kariya-shi Aichi 448-8671 (JP)**
• **Shimazaki, Kazunori**
  **Kariya-shi Aichi 448-8671 (JP)**
• **Nakashima, Yutaka**
  **Kariya-shi Aichi 448-8671 (JP)**
• **Hika, Koji**
  **Kariya-shi Aichi 448-8671 (JP)**

(74) Representative: **TBK-Patent et al**
  **Bavariaring 4-6**
  **80336 München (DE)**

(54) **Parking assist apparatus**

(57) A parking assist apparatus (100,200) has a vehicle moving path providing means (4) for providing a standard parking assist sequence (L). The standard parking assist sequence (L) has at least one moving pattern for moving a vehicle (7) into a parking area (S). The parking assist apparatus (100,200) further has an information acquiring means (14) for acquiring information about an obstacle (20) in the vicinity of the parking area (S) and a vehicle moving path adding means (5) for generating a modified parking assist sequence by adding at least one additional moving pattern to the standard parking assist sequence (L), based on the information about the obstacle (20).

# FIG.1

EP 2 202 132 A2

## Description

BACKGROUND OF THE INVENTION

The present invention relates to a parking assist apparatus.

A parking assist apparatus is disclosed in Japanese Patent Application Publication 2001-18821 which provides a parking assist in moving a vehicle into a parking area based on a standard parking assist sequence composed of moving the vehicle forward from an initial target stop position to a stop position reachable after moving forward and moving backward from the stop position to a target parking position. If the vehicle collides with an obstacle when the vehicle moves in accordance with the standard parking assist sequence, the parking assist apparatus generates a moving path so as to move the vehicle in the parking area and to get around the obstacle by changing moving distance of any specific moving pattern of the standard parking assist sequence.

The moving pattern as used in the above Publication and the present invention refers to six patterns, i.e., moving straight forward, moving straight backward, moving forward while turning rightward, moving forward while turning leftward, moving backward while turning rightward and moving backward while turning leftward. Each moving pattern consists of two elements, i.e., moving distance and turning radius. The above Publication shows a control method in which the moving distance in moving straight forward is extended. This does not mean addition of a moving pattern to the standard parking assist sequence but a change of the element (moving distance) of the moving pattern (moving straight forward).

In the above Publication, the area within which the stop position of the vehicle is allowed to be away from the initial target stop position for the vehicle to move into the parking area from the stop position properly with the aid of the parking assist apparatus is limited. Therefore, the parking assist apparatus cannot sometimes move the vehicle in the parking area properly depending on location and size of the obstacle. Furthermore, since the parking assist apparatus in the same Publication only allows for the change of a moving distance of any specific moving pattern of the standard parking assist sequence, the degree of freedom for the vehicle to move for parking is so small that the parking assist apparatus cannot generate a modified parking assist sequence in some cases.

The present invention is directed to providing a parking assist apparatus that makes it possible to move a vehicle into a target parking position or generate an appropriate moving path to a target parking position if there is any obstacle in the vicinity of the target parking position.

SUMMARY OF THE INVENTION

A parking assist apparatus has a vehicle moving path providing means for providing a standard parking assist sequence. The standard parking assist sequence has at least one moving pattern for moving a vehicle into a parking area. The parking assist apparatus further has an information acquiring means for acquiring information about an obstacle in the vicinity of the parking area and a vehicle moving path adding means for generating a modified parking assist sequence by adding at least one additional moving pattern to the standard parking assist sequence, based on the information about the obstacle.

Other aspects and advantages of the invention will become apparent from the following description, taken in conjunction with the accompanying drawings, illustrating by way of example the principles of the invention.

BRIEF DESCRIPTION OF THE DRAWINGS

The features of the present invention that are believed to be novel are set forth with particularity in the appended claims. The invention together with objects and advantages thereof, may best be understood by reference to the following description of the presently preferred embodiments together with the accompanying drawings in which:

FIG. 1 is a plan view of a vehicle equipped with a parking assist apparatus and a parking area for the vehicle according to a first embodiment of the present invention;

FIG. 2 is a schematic plan view of a mark used in the first embodiment;

FIG. 3 is a schematic configuration diagram showing various devices of the parking assist apparatus according to the first embodiment;

FIG. 4 is a plan view showing the vehicle and the parking area and describing a standard parking assist sequence stored in a vehicle moving path storing means of the parking assist apparatus according to the first embodiment;

FIG. 5 is a graph showing a relation between the steering angle and the moving distance of the vehicle when the vehicle moves from an initial target stop position to a target parking position based on the standard parking assist sequence;

FIG. 6 is a plan view showing the vehicle and the parking area and describing a vehicle moving path from an actual initial stop position to the target parking position according to the first preferred embodiment;

FIG. 7 is a graph showing a relation between the steering angle and the moving distance of the vehicle from the actual initial stop position to the target parking position according to the first preferred embodiment;

FIG. 8 is a plan view of a vehicle and a parking area and describing a vehicle moving path from an actual initial stop position to a target parking position according to a second preferred embodiment;

FIG. 9 is a graph showing a relation between the steering angle and the moving distance of the vehicle from the actual initial stop position to the target parking position according to the second preferred embodiment;

FIG. 10 is a plan view of a vehicle and a parking area and describing a vehicle moving path from an actual initial stop position to a target parking position according to a third embodiment; and

FIG. 11 is a schematic configuration diagram showing various devices of the parking assist apparatus according to the third embodiment;

DETAILED DESCRIPTION OF THE PREFERRED EMBODIMENTS

(First Embodiment)

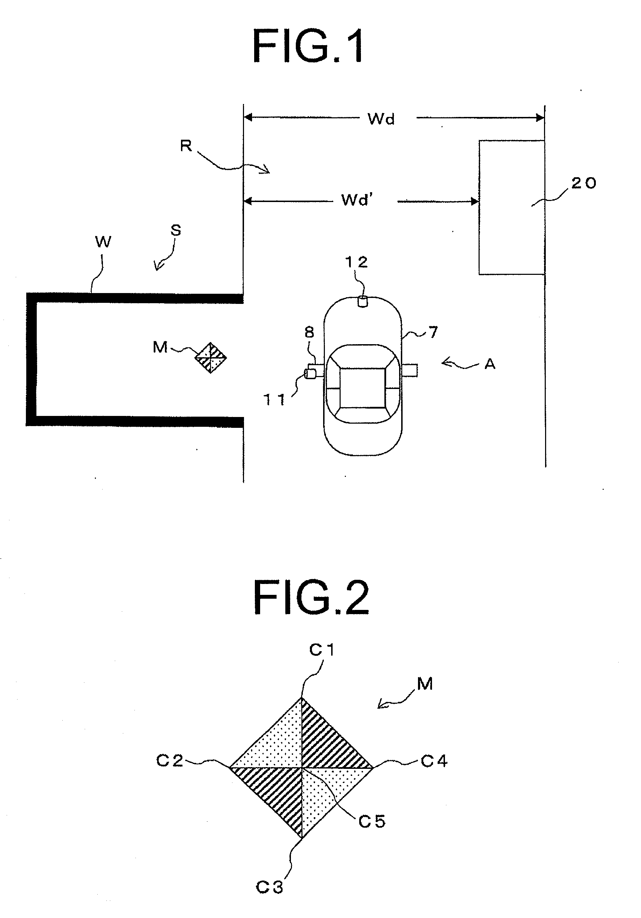

First through third embodiments according to the present invention will now be described with reference to FIGS. 1 through 11.

A vehicle 7 equipped with a parking assist apparatus 100 and a parking area S for the vehicle 7 according to the first embodiment is shown in plan view in FIG. 1. A rectangular parking area having walls on three sides thereof is designated by symbol S and a mark M indicative of various information about the parking area S is set on the floor of the parking area S.

The vehicle 7 is equipped with a side monitor camera 11 incorporated in a door mirror 8 for taking an image of the mark M and with a front monitor camera 12 mounted in the front of the vehicle 7.

A road R having a width Wd extends in front of the parking area S in perpendicular relation to the longitudinal direction of the parking area S. FIG. 1 shows a state wherein the vehicle 7 is stopped at the initial target stop position

where the side monitor camera 11 can take an image of the mark M and the parking assist apparatus 100 starts to operate. There is an obstacle 20 located on the opposite side of the vehicle 7 from the parking area S and also forward of the vehicle 7. The road R is narrowed to Wd' at the position thereof where the obstacle 20 is present.

The mark M is fixed to a predetermined position with a predetermined positional relation to the parking area S and the parking assist apparatus 100 is informed of such positional relation. The mark M has a distinguishable figure and may be, for example, of a square-shaped figure by four isosceles right angles connected each other, as shown in FIG. 2. Any two adjacent isosceles right angles are coded by different colors and the mark M has five feature points C1 through C5, which are determined by the intersection points of the sides of the isosceles right angles, as shown in FIG. 2.

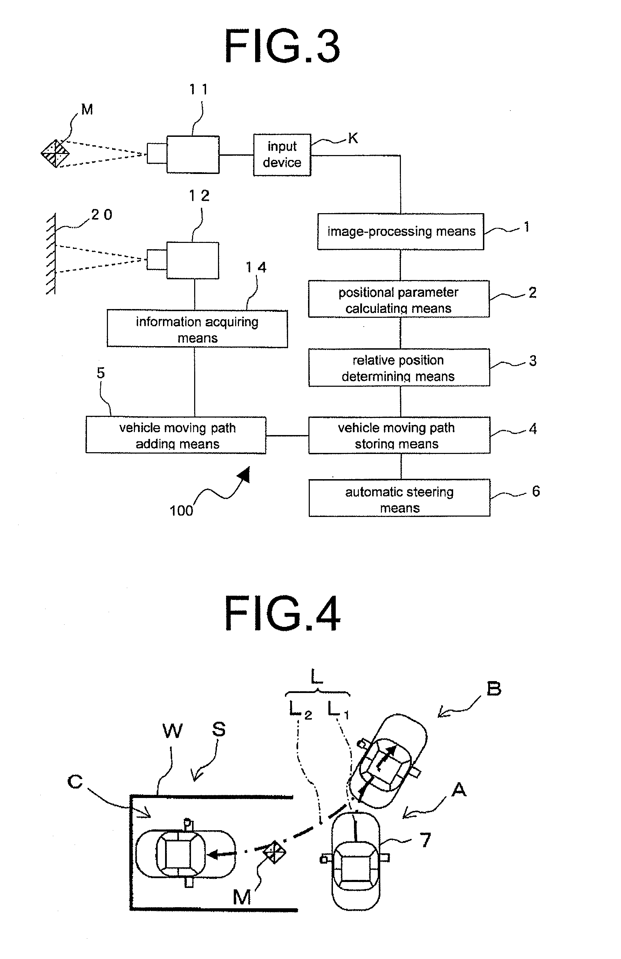

As shown in FIG. 3, the side monitor camera 11 is connected to an input device K. The input device K is connected to an image-processing means 1 that extracts the feature points from an image of the mark M captured by the side monitor camera 11 and recognizes them on the image in two-dimensional coordinate. The image-processing means 1 is connected to a positional parameter calculating means 2 that calculates a positional parameter of the side monitor camera 11 relative to the position of mark M. The positional parameter calculating means 2 is connected to a relative position determining means 3 that determines a positional relation between the vehicle 7 and the parking area S. The relative position determining means 3 is connected to a vehicle moving path storing means 4 storing a standard parking assist sequence L (refer to FIG. 4) that is a predetermined moving path for guiding the vehicle 7 in the parking space S. The vehicle moving path storing means 4 as used herein corresponds to a vehicle moving path providing means for providing the standard parking assist sequence L. The vehicle moving path storing means 4 is connected to an automatic steering means that executes a parking operation by steering the vehicle 7 automatically based on the standard parking assist sequence L or the modified parking assist sequence.

A front monitor camera 12 as a detecting device detecting an obstacle 20 is connected to an information acquiring means 14 that acquires information about the obstacle 20 detected by the front monitor camera 12 such as position and size. The information acquiring means 14 is connected to a vehicle moving path adding means 5 that adds an extra moving path to the standard parking assist sequence L based on the aforementioned information for the obstacle 20.

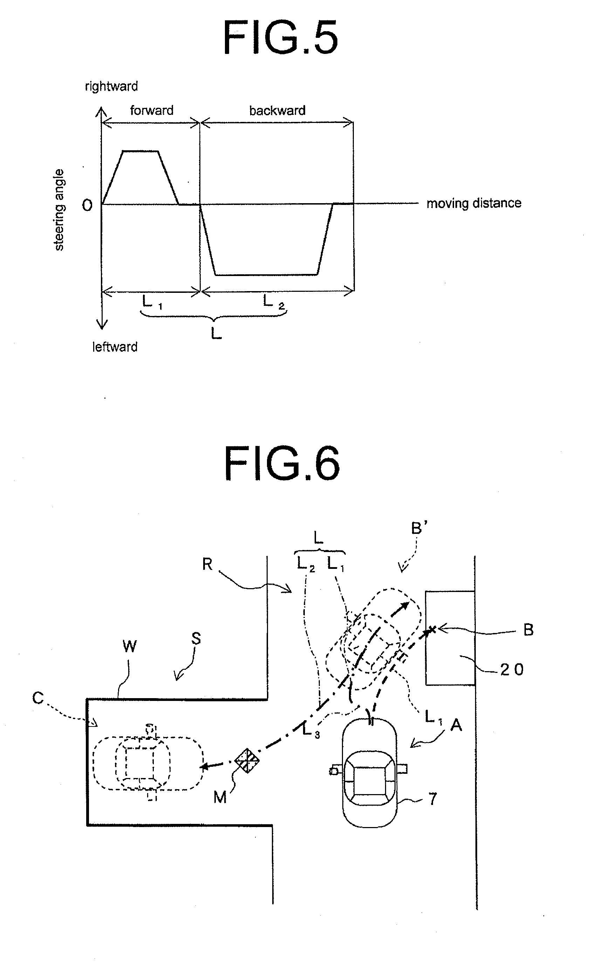

The standard parking assist sequence L stored in the vehicle moving path storing means 4 is a path for moving the vehicle 7 from an initial target stop position A as a starting point to a target parking position C through a stop position B reachable after moving forward from the position A, as shown in FIG. 4. In other words, the standard parking assist sequence L consists of the first moving path L1 according to which the vehicle 7 is moved forward to the stop position B while being turned rightward and the second moving path L2 according to which the vehicle 7 is moved backward from the stop position B to the target parking position C while being turned toward the target parking position C. As shown in FIG. 5, while the vehicle 7 moves along the first moving path L1, the vehicle 7 is moved forward while being turned rightward, or away from the parking position C, with an increasing steering angle. When the steering angle reaches a certain angle, the vehicle 7 is moved further forward while maintaining the steering angle unchanged and then returning the steering angle to zero. The vehicle 7 is further moved forward with the steering angle kept at zero until the vehicle 7 reaches the stop position B. When the vehicle 7 is moved along the second moving path L2, the vehicle 7 is moved backward while being turned leftward, in other words, while increasing the steering angle in the direction that makes the vehicle 7 to approach the target parking position C. When the steering angle reaches a certain angle, the vehicle 7 is backed further while keeping the steering angle unchanged and then returning the steering angle toward zero. When the steering angle reaches zero, the vehicle 7 is moved straight backward with the steering angle kept at zero until the vehicle 7 reaches the target parking position C. The standard parking assist sequence has a determined combination of different moving patterns and each of moving patterns has a fixed turning radius and a fixed moving distance. The definition of the moving pattern is the same as that of the aforementioned Publication and refers to six patterns as previously explained.

The following will describe the operation of the parking assist apparatus 100 of the first embodiment. Suppose that the vehicle 7 equipped with the parking assist apparatus 100 according to the first preferred embodiment moves in the target parking position C in the parking area S through a guidance of the parking assist apparatus 100, as shown in FIG. 6. At first, the vehicle 7 stops at the initial target stop position A. Whether the vehicle 7 stops at the initial target stop position A or not is judged based on the image of the mark M captured by the side monitor camera 11.

The image of the mark M captured by the side monitor camera 11 is inputted into the image-processing means 1 through the input device K. The image-processing means 1 extracts five feature points C1 through C5 from the captured image of the mark M and recognizes them on the image in two-dimensional coordinate. Based on the five feature points C1 through C5 in two-dimensional coordinate recognized by the image-processing means 1, the positional parameter calculating means 2 calculates six positional parameters of the side monitor camera 11, i.e., three-dimensional coordinate (x,y,z), a tilting angle (depression angle), a panning angle (direction angle), a swing angle (rotation angle), based on the mark M, respectively.

The following will describe the method for calculating the positional parameters by the positional parameter calculating means 2. Suppose that the position on the ground surface at which a line extending vertically from the center of the rear axle of the vehicle 7 intersects with the ground surface is the origin 0 of ground surface coordinate system having x-axis and y-axis in horizontal directions and z-axis in vertical direction. Also suppose that there is an image coordinate system, i.e., X-axis and Y-axis on the image captured by the side monitor camera 11. The coordinate values, Xm and Ym (m=1-5) of the feature points C1 through C5 of the mark M on the image coordinate system are expressed by the six positional parameters of the feature points C1 through C5 of the mark M in the ground surface coordinate system, i.e., the coordinate values, xm, ym, zm, the aforementioned angle parameters, Kn (n=1-3), the tilt angle, the panning angle, the swing angle, using functions F, G, as follows:

$$Xm=F(xm,ym,zm,Kn)+DXm$$

$$Ym=G(xm,ym,zm,Kn)+DYm$$

wherein DXm and DYm are deviations between X, Y coordinates of the feature points C1 through C5 calculated by the functions, F, G and Xm, Ym coordinate values of the feature points, C1 through C5 recognized by the image-processing means 1, respectively.

In other words, ten relational expressions are formed for the six positional parameters (xm, ym, zm, Kn) by expressing five feature points, C1 through C5 in X, Y-axes, respectively. Then the positional parameters (xm, ym, zm, Kn) are found so as to minimize the square sum for the deviations, DXm, DYm, i.e., S= Σ (DXm$^2$+DYm$^2$). Eventually, an optimization method such as simplex method, steepest descent method, Newton method, quasi-Newton method and the like may be used.

Since the positional parameters are decided by forming more than six relational expressions, wherein "six" is the number of the positional parameters (xm, ym, zm Kn) to be calculated, the positional parameters (xm, ym, zm, Kn) are found more precisely. In the first embodiment, ten relational expressions are generated for the six positional parameters (xm, ym, zm, Kn) by the feature points, C1 through C5. However, if the number of relational expressions is more than or equal to the number of positional parameters (xm, ym, zm, Kn) to be calculated, the positional parameters can be obtained. Therefore, six positional parameters (xm, ym, zm, Kn) can be calculated as long as six relational expressions are formed by at least three feature points.

Making use of the caluculated positional parameters of the side monitor camera 11, the relative position determining means 3 specifies the positional relation between the vehicle 7 and the parking area S. That is, the positional relation between the side monitor camera 11 and the parking area S can be specified based on the positional parameters calculated by the positional paremeter calculating device 2 and the predetermined positional relation between the mark M and the parking area S. Since the positional relation between the side monitor camera 11 and the vehicle 7 is known, the positional relation between the vehicle 7 and the parking area S is specified. Accordingly, whether the vehicle 7 stops at the initial target stop position A or how far apart from the initial target stop position A the vehicle 7 stops can be recognized.

When the vehicle 7 stops at the initial target stop position A, the condition of the area in front of the vehicle 7 is detected by the front monitor camera 12 as the detection device. In the case of FIG. 1, the width of the road R in front of the vehicle 7 narrowed due to the presence of the obstacle 20 and the front monitor camera 20 detects the obstacle 20 in terms of its position and size. Such information of the obstacle detected by the front monitor camera 12 is transmitted to the information acquiring means 14. Based on the information transmitted to the information acquiring means 14 and the standard parking assist sequence L, the vehicle moving path adding means 5 determines whether or not the vehicle 7 will bump against the obstacle 20 or whether the distance between the vehicle 7 and the obstacle 20 will be decreased less than a predetermined distance when the vehicle 7 is moved along the first moving path L1 from the initial target stop position. In other words, the vehicle moving path adding means 5 determines whether or not the obstacle 20 will interfere with the vehicle 7 when it is moved along the path L1.

When it is determined that the obstacle 20 will not interfere with the vehicle 7, the vehicle 7 is steered automatically by the automatic steering means 6 so as to move along the standard parking assist sequence L without addition by the vehicle moving path adding means 5 of any moving path to the standard parking assist sequence L stored in the storing device 4 by the information acquiring means 14.

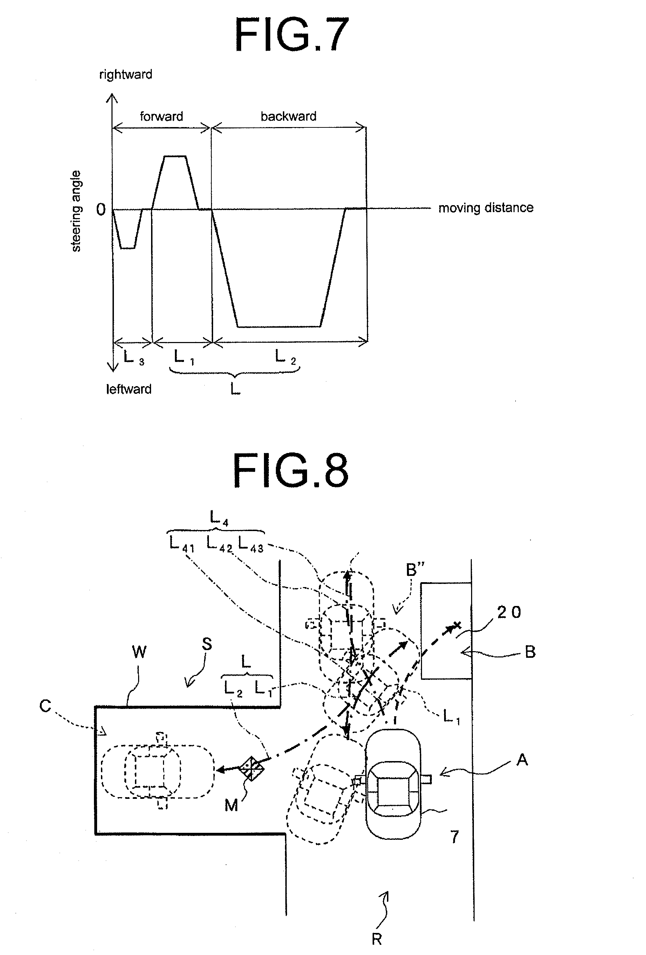

On the other hand, when it is determined that the vehicle 7 will interfere with the obstacle 20, the vehicle moving path adding means 5 calculates a third moving path L3, as shown in FIG. 7, and adds it before the first moving path L1 of the standard parking assist sequence L stored in the vehicle moving path storing means 4 based on the information acquired by the information acquiring means 14. The third moving path L3 is a path for moving the vehicle 7 to a modified stop position B' around the obstacle 20. Specifically, the third moving path L3 is a combination of movements comprised of moving forward while steering in a direction that makes the vehicle 7 to approach the target parking position C and also increasing the steering angle, after a certain steering angle has been reached, moving further forward while keeping the steering angle, moving forward while returning the steering angle toward zero and after the steering angle has reached zero, moving forward while keeping the zero steering angle, as shown in FIG. 7.

The standard parking assist sequence L shown in FIG. 7, i.e., a combination of plural moving patterns, is the same as the standard parking assist sequence L shown in FIG. 5. However, the standard parking assist sequence L shown in FIG. 7 is different from that shown in FIG. 5 in terms of value of moving distance and turning radius.

A moving path for moving straight forward with the steering angle at zero is formed between a moving pattern for moving forward while turning in either direction and another moving pattern for moving forward while turning the opposite direction so that the driver can operate the steering wheel with a small force. This moving path for moving straight forward may be dispensed with.

The vehicle 7 moving along the third moving path L3 and subsequently the first moving path L1 reaches the modified stop position B'
where the vehicle 7 is clear of the obstacle 20. The vehicle 7 moving along the second moving path L2 from the modified stop position B' reaches the target parking position C. Thus, the vehicle 7 is moved into the parking area S while moving around the obstacle 20.

When there is an obstacle such as 20 near the parking area S, a modified parking assist sequence is generated by adding the third moving path L3 to the standard parking assist sequence L so that the vehicle 7 is moved into the parking area S while getting around the obstacle. Therefore, the vehicle 7 can be moved into the parking area S while getting around any obstacle near the parking area S.

Thus, the parking assist apparatus 100 according to the present invention has a standard parking assist sequence L composed of at least one moving pattern. Furthermore, the parking assist apparatus 100 has the information acquiring means 14 for acquiring the information about any obstacle located near the parking area S and a modified parking assist sequence which allows the vehicle 7 to move in the parking area S while moving around the obstacle is generated by adding at least one moving pattern to the standard parking assist sequence L.

Each moving pattern of the standard parking assist sequence L does not necessarily have elements of fixed values. As long as the standard parking assist sequence L has the same combination of moving patterns, the elements of each moving pattern, i.e., the moving distance and the turning radius, may have different value.

(Second Embodiment)

The following will describe the second embodiment of the present invention. The following description will use the same reference numbers for the common elements or components in both embodiments, and the description of such elements or components in FIGS. 1 through 7 for the second embodiment will be omitted. The parking assist apparatus 100 according to the second embodiment deals with a case where the width of the road is narrower than that in the first embodiment due to the presence of the obstacle 20. The elements or components of the parking assist apparatus 100 are the same as those in the first embodiment.

As in the case of the first embodiment, after the vehicle stops at the initial target stop position A, as shown in FIG. 8, the front monitor camera 12 detects the condition of the area in front of the vehicle 7 and the vehicle moving path addition device 5 determines whether the vehicle 7 moving forward from the initial target stop position A along the first moving path L1 of the standard parking assist sequence L (along the first moving path as shown by a broken line in FIG. 8) will interfere with the obstacle 20. When it is determined that the vehicle 7 will not interfere with the obstacle 20, the vehicle moving path adding means 5 add no moving path to the standard parking assist sequence L stored in the vehicle moving path storing means 4 and the automatic steering means 6 steers the vehicle 7 automatically so that the vehicle 7 moves along the standard parking assist sequence L.

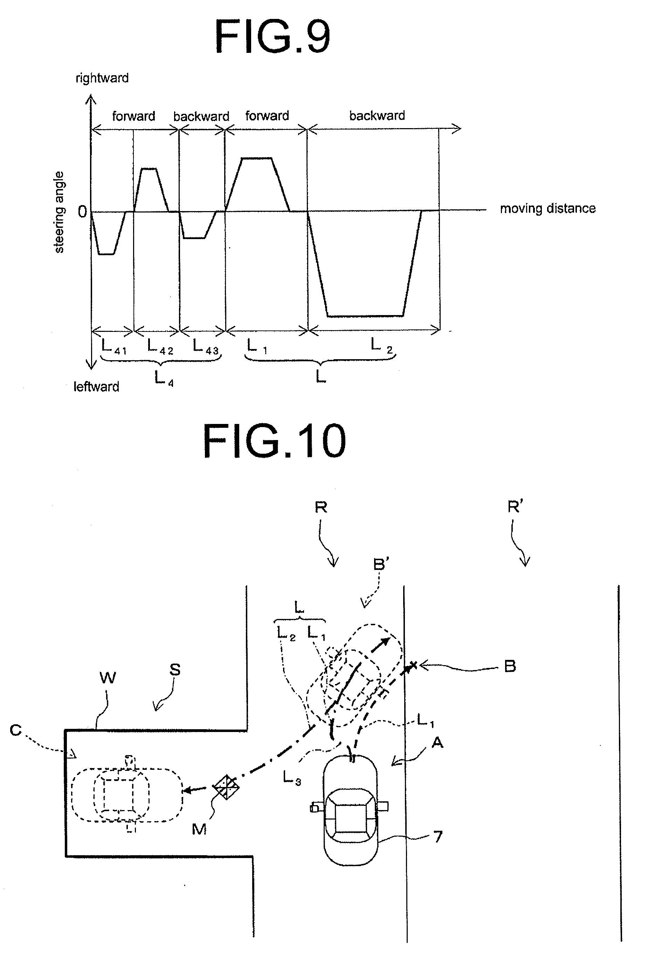

On the other hand, when the vehicle 7 will interfere with the obstacle 20, the vehicle moving path adding means 5 calculates a fourth moving path L4 and adds it before the first moving path L1 of the standard parking assist sequence L stored in the vehicle moving path storing means 4 based on the information acquired by the information acquiring means 14. The fourth moving path L4, i.e. a combination of a first added moving path L41, a second added moving path L42 and a third added moving path L43, is a path for moving the vehicle 7 to a modified stop position B" around the obstacle 20. Specifically, as shown in FIG. 9, the first added moving path L41 is a combination of movements comprised of moving forward while steering in a direction that makes the vehicle 7 to approach the target parking position C (or leftward steering) and also increasing the steering angle, after a certain steering angle has been reached, moving further forward while keeping that steering angle, moving forward while returning the steering angle toward zero and, after the steering angle has reached zero, moving forward while keeping the steering angle at zero. The second added moving path L42 is a combination of movements comprised of moving forward while steering in a direction that makes the vehicle 7 to move away from the target parking position C (or rightward steering) and also increasing the steering angle, after a certain steering angle has been reached, moving forward while keeping that steering angle, moving forward while decreasing the steering angle toward zero and after the steering angle has reached zero, moving forward while keeping the steering angle at zero. The third added moving path L43 is a combination of movements comprised of moving backward while steering in a direction that makes the vehicle 7 to approach the target parking position C and also while increasing the steering angle, after the steering angle has reached a certain angle, moving backward while keeping that steering angle, moving backward while returning the steering angle toward zero and, after the steering angle has reached zero, moving backward while keeping the steering angle at zero.

The standard parking assist sequence L in FIG. 9 has the same combination of moving patterns as that in FIG. 5. However, the standard parking assist sequence L in FIG. 9 is different from that in FIG. 5 in terms of the value for elements of each moving pattern (i.e., distance, turning radius).

The vehicle 7 moved along the fourth moving path L4 and subsequently the first moving path L1 reaches the modified stop position B" without interfering with the obstacle 20. The vehicle 7 reaches the target parking position C by moving along the second moving path L2 from the modified stop position B". Thus, the vehicle 7 is moved into the parking area S while moving around the obstacle 20.

When there is an obstacle such as 20 near the parking area S, the new standard parking assist sequence L is generated by adding the fourth moving path L4 to the standard parking assist sequence L, so that the vehicle 7 is moved into the parking area S without interfering with the obstacle 20. Therefore, the vehicle 7 can be moved into the parking area S while getting around the obstacle 20 near the parking area S.

(Third Embodiment)

The following will describe the third embodiment of the present invention. Unlike the first embodiment, there is no obstacle such as 20 in the road R, but there runs an opposite vehicle lane R' (opposite traffic lane) in the third embodiment so that the vehicle 7 should be moved into the parking area S without moving into the opposite vehicle lane when the traffic is heavy.

As shown in FIG. 10, the road R extends in front of the parking area S and in perpendicular relation to the longitudinal direction of the parking area S in front of the parking area S. The vehicle road R' is located on the opposite side of the road R from the parking area S and extending parallel to the road R. The width of the road R is designed so that the stop position B reachable after moving forward is located within the road R' when the vehicle 7 moves along the standard parking assist sequence L. Supposing that the traffic in the road R' is light in the nighttime but heavy in the daytime, it is not so dangerous for the vehicle 7 to move into the road R' while moving along the standard parking assist sequence L in parking the vehicle into the parking area S in the nighttime. In parking the vehicle 7 by moving along the standard parking assist sequence L in the daytime, however, the driver has to pay great attention to other vehicles running on the road R' so as to avoid colliding with any other vehicle. Therefore, when the vehicle 7 moves into the parking area S in the daytime, the vehicle 7 should move along a different parking assist sequence without moving into the area of the road R'.

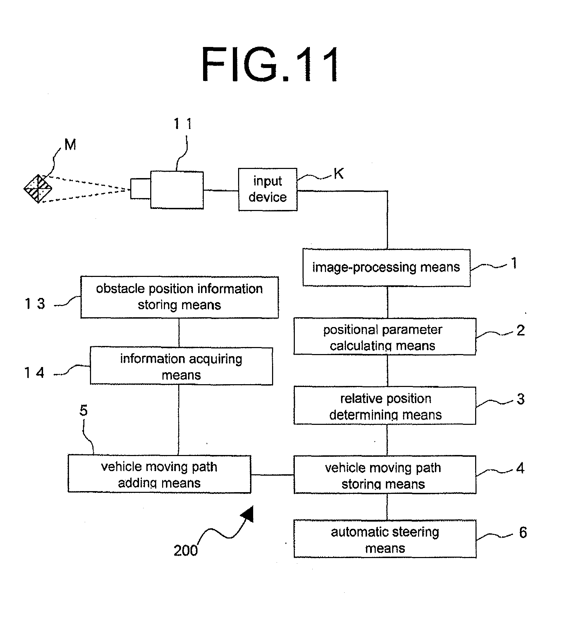

As shown in FIG. 11, the parking assist apparatus 200 according to the third embodiment has an obstacle position information storing means 13 instead of the front monitor camera 12 as the detection device in the first embodiment and an information acquiring means 14. The obstacle position information storing means 13 stores therein information about the obstacle such as the position of the road R'. The information acquiring means 14 acquires the information from the obstacle position information storing means 13. A selection switch not shown is provided in the vehicle compartment at a position adjacent to the driver's seat to be used for selecting whether the vehicle 7 is moved into the parking area S without moving into the area of the road R' or not. Since the road R' in the embodiment is regarded as an obstacle, it can be said that the selection switch selects whether the vehicle is moved into the parking area S without interfering with the obstacle or not. The other elements or components of the parking assist apparatus are the same as those in the first embodiment.

The following will describe the operation of the parking assist apparatus 200 of the third embodiment. When the selection switch is turned on, the information acquiring means 14 acquires from the obstacle position information storing means 13 the information about the road R' such as its position. As in the case of the first embodiment, the vehicle moving path adding means 5 adds the third adding path L3 to the standard parking assist sequence L based on the information, so that a modified parking assist sequence is generated for moving the vehicle 7 into the parking area S without moving into the area of the road R'. Thus, the vehicle 7 moved along the modified parking assist sequence is parked in the parking area S without moving into the area of the road R'.

Thus, the information acquiring means 14 acquires the information about the obstacle around the parking area S as needed from the obstacle position information storing means 13. According to the information, the vehicle moving path adding means 5 adds the third moving path L3 to the standard parking assist sequence L. The same advantageous effects as those of the first embodiment can be obtained.

In the third embodiment, the third moving path L3 in the first embodiment is added to the standard parking assist sequence L. Depending on the position of the road R', the fourth moving path L4 in the second embodiment may be added to the standard parking assist sequence L.

The operation by the selection switch in the third embodiment may be combined with the operation in each of the first and the second embodiments.

Though the first through fourth embodiments have been described with reference to double-parking, the present invention is not limited to the double-parking but it may be applied to parallel-parking.

In the first through third embodiments, the vehicle moving path adding means 5 as used herein has functions of generating a modified parking assist sequence and judging whether or not the obstacle will interfere with the vehicle 7 based on the information about the obstacle. However, as an independent means for judging whether or not the obstacle will interfere with the vehicle 7 based on the information about the obstacle, aside from the vehicle moving path adding means 5, the parking assist apparatus may have a vehicle interference judging means for judging whether or not the obstacle will interfere with the vehicle 7, based on the information about the obstacle. It may be also possible that the vehicle interference judging means itself has a plurality of functions of generating a modified parking assist sequence and the like, other than the function of judging whether or not the obstacle will interfere with the vehicle 7.

In the first through third embodiments, the parking assist apparatus automatically performs the parking operation by using the automatic steering means 6. The present invention is not limited to the above first through third embodiments. According to the present invention, however, the parking assist apparatus may be of a type which provides the driver with parking assist information so that he can manually park the vehicle in the parking area S.

The initial target stop position A is located at a predetermined position in the first through third embodiments. However, the initial target stop position A may be located anywhere within a certain area.

It may be so arranged in the first through third embodiments that, if it is determined that parking of the vehicle 7 in the parking area S cannot be performed because of the presence of a large obstacle near the parking area S, the parking assist apparatus may send the driver of information to that effect through a display and the like.

In the first through third embodiments, when it is determined that the vehicle 7 will interfere with the obstacle, the vehicle 7 does not necessarily have to be parked in the parking area S based on the modified parking assist sequence. The interference may be avoided by changing the element of moving patterns such as moving distance, as disclosed, for example, in the aforementioned Publication 2001-18821. If it is difficult to park the vehicle by changing the element of moving patterns, the vehicle may be parked in the parking area based on the modified parking assist sequence.

In the first through third embodiments, when it is determined that the vehicle 7 will interfere with any obstacle, the vehicle 7 is moved into the parking area based on the modified parking sequence. Alternatively, when the distance between the vehicle 7 and the obstacle is judged to be less than a predetermined distance, the vehicle 7 may be controlled so as to be moved into the parking area S based on the modified parking sequence. This alternative control is effective to prevent the occurrence of such a case that the driver applied the brake at a position that was then so close to the obstacle that parking of the vehicle cannot be accomplished any more.

A parking assist apparatus has a vehicle moving path providing means for providing a standard parking assist sequence. The standard parking assist sequence has at least one moving pattern for moving a vehicle into a parking area. The parking assist apparatus further has an information acquiring means for acquiring information about an obstacle in the vicinity of the parking area and a vehicle moving path adding means for generating a modified parking assist sequence by adding at least one additional moving pattern to the standard parking assist sequence, based on the information about the obstacle.

## Claims

1. A parking assist apparatus (100, 200) comprising:

   a vehicle moving path providing means (4) for providing a standard parking assist sequence (L), wherein the standard parking assist sequence has at least one moving pattern for moving a vehicle (7) into a parking area (S), **characterized in that** the parking assist apparatus further has

an information acquiring means (14) for acquiring information about an obstacle (20) in the vicinity of the parking area; and a vehicle moving path adding means (5) for generating a modified parking assist sequence by adding at least one additional moving pattern to the standard parking assist sequence, based on the information about the obstacle.

2.  The parking assist apparatus according to claim 1, **characterized in that** the parking assist apparatus further has:

    a detection device (12) for detecting the obstacle,

    wherein the information acquiring means acquires the information from the detection device.

3.  The parking assist apparatus according to claim 1, **characterized in that** the parking assist apparatus further has:

    an obstacle position information storing means (13) for storing the information about the obstacle,

    wherein the information acquiring means acquires the information from the obstacle position information storing means.

4.  The parking assist apparatus according to any one of claims 1 through 3, further having:

    a vehicle interference judging means (5) for judging whether or not the obstacle will interfere with the vehicle based on the information of the obstacle,

    **characterized in that** when the vehicle interference judging means determines that the vehicle moving based on the standard parking assist sequence will interfere with the obstacle, the vehicle moving path adding means generates the modified parking assist sequence.

5.  The parking assist apparatus according to any one of claims 1 through 4, **characterized in that** the parking assist apparatus further has:

    a selection switch for selecting manually whether the vehicle moving path adding means generates the modified parking assist sequence or not.

6.  The parking assist apparatus according to any one of claims 1 through 5, **characterized in that** the standard parking assist sequence has a moving pattern of moving forward while turning in a certain direction to a stop position reachable after moving forward and another moving pattern of moving backward while turning in the opposite direction from the certain direction from the stop position to a target parking position.

7.  The parking assist apparatus according to any one of claims 1 through 6, **characterized in that** the additional moving pattern is added before the standard parking assist sequence.

8.  The parking assist apparatus according to claim 6, **characterized in that** the additional moving pattern is a pattern of moving forward while turning in the opposite direction from the certain direction, wherein the additional moving pattern is added before the standard parking assist sequence.

9.  The parking assist apparatus according to claim 6, **characterized in that** the additional moving pattern has patterns of moving forward in the opposite direction from the certain direction, subsequently moving forward while turning in the certain direction and subsequently moving backward while turning in the opposite direction from the certain direction, wherein the additional moving pattern is added before the standard parking assist sequence.

10. The parking assist apparatus according to any one of claims 1 through 9, **characterized in that** the parking assist apparatus further has:

    a camera (11) for capturing an image of a mark (M) from the vehicle, wherein the camera is fixed to the vehicle, wherein the mark is fixed to the parking area and has a distinguishable figure; a positional parameter calculating means (2) for calculating a positional parameter of the camera relative to the position of the mark; and a relative position determining means (3) for determining a positional relation between the vehicle and the parking area.

# FIG.1

Wd

R

Wd'

20

W

S

12

8

7

M

A

11

# FIG.2

C1

M

C2

C4

C5

C3

# FIG.3

M

11

input device — K

12

20

image-processing means — 1

14

information acquiring means

positional parameter calculating means — 2

5

relative position determining means — 3

vehicle moving path adding means

vehicle moving path storing means — 4

100

automatic steering means — 6

# FIG.4

L

L₂ L₁

B

W S

C

A

M

7

# FIG.5

# FIG.6

# FIG.7

# FIG.8

# FIG.9

rightward

forward backward forward backward

steering angle

0 — moving distance

$L_{41}$  $L_{42}$  $L_{43}$  $L_1$  $L_2$

$L_4$  $L$

leftward

# FIG.10

R  R'

B'

L

$L_2$  $L_1$

B

W  S

C

$L_1$

A

$L_3$

M

7

# FIG.11

## REFERENCES CITED IN THE DESCRIPTION

**Patent documents cited in the description**

- JP 2001018821 A